# EUROPÄISCHE PATENTANMELDUNG

(11) **EP 2 990 628 A1**
(43) Veröffentlichungstag der Anmeldung: **02.03.2016**
(21) Anmeldenummer: 14182650.3
(22) Anmeldetag: 28.08.2014
(51) Int. Cl.: F02C 9/46, F02C 9/54, F01D 21/00

(54) **Bremseinrichtung für eine Gasturbine bei Lastabwurf**

(71) Anmelder: Siemens Aktiengesellschaft, 80333 München (DE)
(72) Erfinder: Link, Marco, 46049 Oberhausen (DE); Savilius, Nicolas, 45359 Essen (DE)

(57) **Zusammenfassung**

Die vorliegende Erfindung betrifft ein Verfahren zum Betrieb einer Gasturbine (1) bei Lastabwurf, welches folgende Schritte umfasst:
- Erzeugung eines elektrischen Signals (10) durch die Leittechnik (11) zur Einleitung eines Lastabwurfs;
- danach folgend eine Aktivierung einer Bremseinrichtung (20), welche direkt oder indirekt mit dem Gasturbinenläufer (2) zusammen wirkt zur Übertragung einer Bremskraft auf diesen;
- ebenfalls nach Erzeugung des elektrischen Signals (10) folgend eine Verminderung der Brennstoffzufuhr an den Brenner (3) der Gasturbine (1). Weiter betrifft die vorliegende Erfindung eine Gasturbine, mit welcher ein solches Verfahren ausgeführt werden kann.

## Beschreibung

Die Erfindung betrifft ein Verfahren zum Betrieb einer Gasturbine bei Lastabwurf sowie eine Gasturbine, welche dazu ausgebildet ist, ein solches Verfahren auszuführen.

Der kontrollierte Betrieb einer Gasturbine bei Lastabwurf stellt den Betreiber mitunter vor große technische Probleme. So erfordert ein Lastabwurf nämlich die Verminderung der an das Netz abgegebenen Leistung in sehr kurzer Zeit, typischerweise in weniger als 10 Sekunden, wobei jedoch der Betreib der Gasturbine weiterhin kontrolliert aufrecht erhalten werden soll. Derartige Lastabwürfe können aus verschiedenen Betriebszuständen der Gasturbine erfolgen. So kann bspw. eine Überführung der Gasturbine aus dem Grundlastbetrieb in den Leerlaufbetrieb erfolgen, oder auch aus dem Grundlastbetrieb in den Betrieb des Eigenbedarfs. Ebenso sind Betriebsweisen denkbar, bei welchen eine sehr schnelle Lastminimierung aus einem beliebigen Gasturbinenbetrieb in eine andere Betriebsweise erfolgt, wobei die neue Betriebsweise signifikant weniger Leistung an das Netz abgibt.

Im Rahmen der vorliegenden Erfindung soll ein Lastabwurf als eine plötzliche Lastverminderung aus einem Normalbetrieb verstanden werden, welche über einen Zeitraum von einigen Sekunden erfolgt. Ein Lastabwurf unterscheidet sich insbesondere von einer gewöhnlichen Leistungsänderung im Normalbetrieb, welche durch eine Änderung des Leistungssollwerts eingeleitet wird, indem die Gasturbine mittels des Leistungsreglers betrieben wird. So werden im Normalbetrieb etwa Abweichungen zwischen Leistungssoll- und Leistungsistwert über eine Änderung des Brennstoffmassenstroms ausgeregelt. Dabei wird die verfügbare Wellenleistung immer komplett von einem Verbraucher (z.B. einem Generator oder etwa allgemeiner dem Stromnetz) aufgenommen.

Im Unterschied dazu wird bei einem Lastabwurf die verfügbare Wellenleistung plötzlich nicht mehr komplett oder überhaupt nicht mehr von einem Verbraucher aufgenommen. Der Lastabwurf stellt damit keine "freiwillig" eingeleitete bzw. durchgeführte Leistungsänderung dar, sondern der Zustand der Gasturbine muss an eine vom Verbraucher festgelegte Leistung angepasst werden. So muss etwa das Brennstoffventil entsprechend weit geschlossen werden, oder das Verdichterleitgitter muss entsprechend weit zugefahren werden. Die Gasturbine geht danach in den Betrieb im Drehzahlregler über, wobei Abweichungen zwischen Drehzahlsoll- und Drehzahlistwert über eine Änderung des Brennstoffmassenstroms ausgeregelt werden.

Insofern sind von der vorliegenden Erfindung typische Betriebsänderungsverfahren, etwa aus einer Grundlast in eine Teillast typischerweise nicht mit umfasst, da diese einer Leistungsregelung unterliegen. Ganz besonders bevorzugt soll die vorliegende Erfindung Lastabwürfe betreffen, welche die Leistungsabgabe an ein Netz vollständig auf Null vermindern.

Nach bisherigen Verfahren erfordert ein Lastabwurf eine sehr schnelle Verminderung der Brennstoffzufuhr an die Brenner der Gasturbine, damit die Gasturbine nicht in einen Zustand gerät, bei welchem die Drehzahl des Gasturbinenläufers unerlaubt hohe Werte erreicht. Da bei Lastabwurf die Gasturbine jedoch keine Netzleistung mehr erbringen muss, kann selbst bei schneller Abschaltung des Brennstoffes die Gasturbine noch kurzzeitig in einen Zustand geraten, bei welchem die Drehzahlwerte über das erlaubte und sichere Maß hinaus überschritten wird. Ist dies der Fall, wäre eine Gasturbine notabzuschalten, wobei ein sehr zeit- und kostenintensiver Neustart der Gasturbine erforderlich wäre. Insofern ist bei Lastabwurf eine Gasturbine derart zu steuern bzw. zu regeln, dass trotz sehr rascher Lastverminderung dennoch ein kontrollierter Betrieb der Gasturbine möglich bleibt.

Wird bei einem Lastabwurf nach dem Stand der Technik der Brennstoffmassenstrom sehr schnell vermindert, ist gleichzeitig die Menge an Ansaugluft geeignet einzustellen. Eine derartige Einstellung erfolgt typischerweise mittels der Verdichtereintrittsschaufeln (Verdichterleitgitter), die ebenfalls sehr schnell geschlossen werden müssen. Dieser Schließvorgang in Koordination mit der Brennstoffzufuhr an die Gasturbine bei sehr geringen Steuerungs- bzw. Regelungszeiten stellt jedoch den Betreiber vor eine große technische Herausforderung. Erschwerend ergibt sich meist noch, dass die Brennstoffzufuhr nach dem Lastabwurf nur schwer genau geregelt bzw. gesteuert werden kann, da die Toträume der Brennstoffzuführleitungen ausreichend groß sein können, um die Gasturbine in einen Überdrehzahlzustand durch Zufuhr von Brennstoff aus diesen Toträumen zu versetzen.

Gemäß dieser Nachteile aus dem Stand der Technik ist es erforderlich, ein Verfahren zum Betrieb einer Gasturbine bei Lastabwurf bzw. eine entsprechende Gasturbine vorzuschlagen, welche die aus dem Stand der Technik beschriebenen Nachteile vermeiden kann. Insbesondere soll das Verfahren bzw. die Gasturbine geeignet sein, einen kontrollierten Lastabwurf zu erreichen. Die Gasturbine soll hierbei insbesondere nicht mit Drehzahlen beaufschlagt werden, die unerlaubt hohe Werte erreichen. Zudem soll es möglich sein, die Gasturbine während des Lastabwurfs in einen kontrollierten Betriebszustand zu versetzen, welcher jederzeit die Wiederaufnahme eines lastabgebenden Betriebszustandes ermöglichen kann.

Diese der Erfindung zugrundeliegenden Aufgaben werden gelöst durch ein Verfahren gemäß Anspruch 1 sowie durch eine Gasturbine gemäß Anspruch 11.

Insbesondere werden die der Erfindung zugrundeliegenden Aufgaben gelöst durch ein Verfahren zum Betrieb einer Gasturbine bei Lastabwurf, welches folgende Schritte umfasst:
- Erzeugung eines elektrischen Signals durch die Leittechnik zur Einleitung eines Lastabwurfs;
- danach folgend eine Aktivierung einer Bremseinrichtung, welche direkt oder indirekt mit dem Gasturbinenläufer zusammen wirkt zur Übertragung einer Bremskraft auf diesen;
- eine Verminderung der Brennstoffzufuhr an den Brenner der Gasturbine, insbesondere ebenfalls nach Erzeugung des elektrischen Signals folgend.

Weiterhin werden die der Erfindung zugrundeliegenden Aufgaben gelöst durch eine Gasturbine, umfassend eine Leittechnik, welche derart ausgebildet ist, dass zur Einleitung eines Lastabwurfes ein elektrisches Signal durch die Leittechnik erzeugt wird, weiterhin umfassend eine Bremseinrichtung, welche mit dem Gasturbinenläufer direkt oder indirekt zusammen wirkt zur Übertragung einer Bremskraft auf diesen, wobei die Bremseinrichtung durch das elektrische Signal aktiviert wird, und wobei weiterhin ein Brennstoffventil umfasst ist, welches derart gesteuert ist, dass insbesondere nach Erzeugung des elektrischen Signals die Brennstoffzufuhr an den Brenner der Gasturbine vermindert wird.

Erfindungsgemäß ist also vorgesehen, dass nach Erzeugung des elektrischen Signals der Leittechnik zur Einleitung eines Lastabwurfs eine Bremseinrichtung aktiviert wird, welche den Gasturbinenläufer mit einer Bremskraft beaufschlagt, die den Gasturbinenläufer davor bewahrt, in einen Zustand zu überwechseln, welcher unerlaubt hohe Drehzahlen aufweist.

Die Beaufschlagung des Gasturbinenläufers mit einer geeigneten Bremskraft erfolgt hierbei erst nach Anzeige eines Lastabwurfs. Typischerweise wird der Lastabwurf durch ein geeignetes Steuer- bzw. Regelsignal angezeigt, welches die Leittechnik entsprechend verarbeitet und infolge dessen das den Lastabwurf einleitende Signal erzeugt. Den Lastabwurf anzeigende Signale können bspw. von extern empfangen werden, können jedoch auch intern in der Leittechnik generiert werden. Erst nach Anzeige des Lastabwurfs kann ein erfindungsgemäßes elektrisches Signal erzeugt werden, welches den Lastabwurf an der Gasturbine auch einleitet. Hierbei ist also zu unterscheiden zwischen einem Lastabwurf anzeigenden Signal und einem Lastabwurf einleitenden Signal. Das den Lastabwurf einleitende Signal veranlasst zudem auch die entsprechende Verminderung, bzw. Unterbrechung der an das Netz abgegebenen Leistung.

An dieser Stelle sollte auch darauf hingewiesen werden, dass die Bremseinrichtung erfindungsgemäß ausreichend schnell (innerhalb von weniger Sekunden) geregelt bzw. gesteuert werden kann, so dass nach der Erzeugung des elektrischen Signals eine geeignete Bremskraft auf den Gasturbinenläufer aufgebracht werden kann.

Erfindungsgemäß ist weiterhin vorgesehen, dass nach Erzeugung des den Lastabwurf anzeigenden Signals, die Brennstoffzufuhr an den Brenner der Gasturbine vermindert wird. Dieser Verminderung der Brennstoffzufuhr ist nicht notwendigerweise mit einer Abschaltung der Brennstoffzufuhr identisch. Eine Verminderung kann jedoch auch eine Abschaltung sein. Typischerweise werden jedoch auch bei einer Abschaltung über weitere alternative Brennstoffversorgungsleitungen, die Gasturbine mit ausreichend Brennstoff versorgt, um bspw. weiterhin eine Pilotflamme zu unterhalten, die etwa auch eine schnelle Betriebsaufnahme unter Lastabgabe gewährleisten kann. Erfindungsgemäß ist es also durchaus möglich, die Gasturbine auch nach Verminderung der Brennstoffzufuhr mit einer geringen Menge an Brennstoff zu versorgen, wobei jedoch der Gasturbinenläufer durch die Bremseinrichtung entsprechend verlangsamt wird.

Typischerweise wird, wie zum Stand der Technik bereits ausgeführt, auch noch eine geeignete Einstellung der Verdichterleitschaufeln (Verdichterleitgitter) vorgenommen, um so den in die Gasturbine angesaugten Luftstrom zu vermindern, und um damit eine instabile Verbrennung durch zu viel Luftzufuhr zu vermeiden. Da die Brennstoffzufuhr jedoch bei Lastabwurf nicht vollständig unterbrochen werden muss, kann auch ein verhältnismäßig stabilerer Verbrennungsbetrieb erreicht werden, so dass sich eine geringere Wahrscheinlichkeit für eine Auslöschung der Flamme ergibt.

An dieser Stelle soll darauf hingewiesen werden, dass die Aktivierung der Bremseinrichtung dahingehend zu verstehen ist, dass erst mit ihrer Aktivierung eine Bremskraft auf den Gasturbinenläufer einwirkt. Vor der betreffenden Aktivierung ist die Bremskraft insbesondere nicht vorhanden.

Weiterhin soll darauf hingewiesen werden, dass die Bremseinrichtung den Gasturbinenläufer direkt mit einer Bremskraft beaufschlagen kann, bzw. dies auch indirekt zu tun in der Lage ist. Weitere konkrete technische Ausführungen hierzu werden weiter unten zu den verschiedenen Ausführungsformen der erfindungsgemäßen Gasturbine vorgestellt. Besonders bevorzugt sind jedoch Ausführungsformen, bei welchen die Bremseinrichtung in direkter Weise mit dem Gasturbinenläufer in Wechselwirkung tritt, da so die Bremskraft mitunter leichter und genauer dosiert werden kann.

Gemäß einer ersten bevorzugten Ausführungsform des erfindungsgemäßen Verfahrens ist vorgesehen, dass weiterhin folgende Schritte umfasst sind.
- Erfassung oder Berechnung des aktuellen Lastzustands der Gasturbine und
- Bestimmung eines Bremsparameters, welcher mit der Bremskraft auf den Gasturbinenläufer korreliert ist,
- und/oder Bestimmung der Bremsdauer, über welche die Bremskraft auf den Gasturbinenläufer übertragen wird.

Der Bremsparameter ist ausführungsgemäß nicht unbedingt als Bremskraft zu verstehen, kann jedoch mit dieser identisch sein. Im Normalfall soll der Bremsparameter als eine Größe verstanden werden, welche Einfluss auf die effektiv ausgeübte Bremskraft ausübt und mit dieser betriebstechnisch in Verbindung steht. Insofern weist der Bremsparameter eine Korrelation mit der Bremskraft auf, welche auf den Gasturbinenläufer übertragen wird.

Als Bremsdauer ist der Zeitraum zu verstehen, während dessen eine Bremskraft auf den Gasturbinenläufer einwirkt. Hierbei ist es nicht erforderlich, dass die Bremskraft kontinuierlich auf den Gasturbinenläufer übertragen wird, sondern dies kann auch intermittierend der Fall sein. Sollte die Bremskraft etwa in einem zeitlichen Muster verschiedener Bremskrafteinwirkungen auf den Gasturbinenläufer erfolgen, betrifft die Bremsdauer den integrierten Zeitbereich, über welchen die einzelnen Bremsvorgänge erfolgt sind. Die Bremsdauer endet in jedem Fall mit erneuter Betriebsaufnahme, d.h. Leistungsabgabe an das Netz nach entsprechender Lasterhöhung.

Durch die ausführungsgemäße Einstellung des Bremsparameters in Abhängigkeit des aktuellen Lastzustands der Gasturbine bzw. durch die geeignete Bestimmung der Bremsdauer in Abhängigkeit des aktuellen Lastzustands kann so eine möglichst effiziente Übertragung von Bremskraft auf den Gasturbinenläufer erfolgen. Ist die Gasturbine bspw. im Grundlastbetrieb und soll ein plötzlicher Lastabwurf erfolgen, wäre somit etwa eine höhere Bremskraft auf den Gasturbinenläufer aufzubringen bzw. eine Bremskraft über eine längere Bremsdauer auf den Gasturbinenläufer aufzubringen, als dies etwa der Fall wäre, wenn aus einem geringeren Teillastbetrieb der Lastabwurf erfolgen sollte. Ausführungsgemäß wird zudem die Bremseinrichtung vor Überlastung geschützt.

Gemäß einer Weiterführung dieser Ideen ist vorgesehen, dass die Bestimmung des Bremsparameters auf der Grundlage eines Vergleichs des aktuellen Lastzustands der Gasturbine mit einem Ziellastzustand erfolgen soll. Insbesondere erfolgt die Berechnung des Bremsparameters auf der Grundlage des Differenzwertes von aktuellem Lastzustand und Ziellastzustand, bzw. auf der Grundlage des Betrags des Differenzwertes. Der Ziellastzustand ist hierbei ein Zustand, welcher etwa einen Wert von weniger oder gleich 50 % des aktuellen Lastzustands annimmt. Der Ziellastzustand ist also ein Betriebszustand, welcher nach eingeleitetem Lastabwurf eine bestimmte Zielleistung an das Netz weiterhin abgeben kann. Die ausführungsgemäße Berechnung kann hierbei kontinuierlich auch über den gesamten Vorgang des Lastabwurfs wiederholt ausgeführt werden, wobei die Berechnung des Bremsparameters zu zunehmend anderen Ergebnissen führen kann, die jeweils zu einer geänderten Bremskraft Anlass geben. In anderen Worten kann während des Lastabwurfs der Bremsparameter geeignet nachgeführt werden, um so den Lastabwurf möglichst kontrolliert auszuführen.

Alternativ oder als Weiterführung dieser Idee kann auch vorgesehen sein, dass die Bestimmung der Bremsdauer auf der Grundlage eines Vergleichs des aktuellen Lastzustands der Gasturbine mit einem Ziellastzustand erfolgt. Insbesondere soll auch hier wiederum die Berechnung der Bremsdauer auf der Grundlage eines Differenzwertes von aktuellem Lastzustand und Ziellastzustand erfolgen, bzw. auf der Grundlage des Betrages des Differenzwertes. Auch diese Berechnung kann wieder kontinuierlich über den gesamten Vorgang des Lastabwurfs wiederholt ausgeführt werden, wobei die Bremsdauer zunehmend neu berechnet und eingestellt wird. Vergleichbar der Bestimmung des Bremsparameters erlaubt auch so die Nachführung des berechneten Wertes für die Bremsdauer während des Lastabwurfs einen gut zu kontrollierenden Betrieb der Gasturbine bei Lastabwurf. Insbesondere können so vorteilhaft Ziellastzustände kontrolliert in verhältnismäßig kurzer Zeit angefahren werden.

Gemäß einer weiterführenden Ausführungsform der Erfindung ist vorgesehen, dass die Bestimmung des Bremsparameters und/oder der Bremsdauer durch Wertevergleich mit einer Tabelle erfolgt, welche in der Leittechnik hinterlegt ist. Die Tabelle weist hierbei insbesondere zu verschiedenen möglichen aktuellen Lastzuständen und zu verschiedenen Ziellastwerten einen geeigneten Bremsparameter und/oder eine geeignete Bremsdauer auf, welcher Wert entsprechend von der Leittechnik zum Betrieb bei Lastabwurf herangezogen werden kann. Die Tabellenwerte sind hierbei insbesondere Modell- oder Erfahrungswerte, welche in die Leittechnik einprogrammiert wurden und folglich ohne weitere Berechnungen zur Verfügung stehen können. Insofern ist die Bestimmung der jeweiligen Bremsparameter und/oder die Bremsdauer in nur sehr geringer Zeit möglich, so dass auch während des sehr kurzen Betriebszustandes des Lastabwurfs geeignete Bremsparameter bzw. die Bremsdauer ermittelt werden kann, ohne hierbei wichtige Zeit zu verlieren, die für Rechenarbeit aufgewendet werden müsste. Gerade auch dann, wenn während des Lastabwurfs der Bremsparameter bzw. die Bremsdauer geeignet nachgeführt wird, erweist sich eine solche Tabelle als überaus vorteilhaft.

Gemäß einer weiteren Ausführungsform des erfindungsgemäßen Verfahrens ist vorgesehen, dass die Bestimmung des Bremsparameters und/oder der Bremsdauer derart erfolgt, dass die Betriebszustände von zeitlich vorhergehenden Lastabwürfen berücksichtigt werden. Das ausführungsgemäße Verfahren soll also als lernendes Verfahren ausgebildet sein. Das Verfahren berücksichtigt vorhergehende Betriebserfahrungen, welche zur geeigneten Einstellung bzw. Justierung eines zeitlich nachfolgenden Ereignisses genutzt wird, so dass dieses besser und gezielter ausgeführt werden kann. Somit können insbesondere Abnutzungen in der Bremseinrichtung berücksichtigt werden, die zu einer anderenfalls abweichenden Einschätzung der Bremskraft Anlass geben würden. Im einfachsten Falle kann so bspw. die Abnutzung einer Bremsscheibe berücksichtigt werden, welche nach entsprechender Abnutzung nur noch eine geringere Bremskraft auf den Gasturbinenläufer übertragen kann.

Gemäß einer weiteren Ausführungsform des erfindungsgemäßen Verfahrens ist vorgesehen, dass nach oder auch vor Aktivierung der Bremseinrichtung eine Bestimmung der Erwärmung der direkt oder indirekt durch die Bremskraft beaufschlagten Teile der Gasturbine erfolgt, wobei bei Überschreiten eines vorbestimmten Temperaturgrenzwertes eine Deaktivierung der Bremseinrichtung erfolgt. Ausführungsgemäß dient die Temperaturbestimmung zur Sicherung des Betriebs, nämlich dann, wenn mit einer thermisch bedingten Schadensnahme zu rechnen ist. Wird bspw. Bremsleistung in Form von thermischer Energie in den Gasturbinenläufer eingebracht, kann dies zu einer erheblichen Erwärmung der Bauteile bzw. des Gasturbinenläufers führen, so dass bei Überschreiten von sicherheitstechnischen Temperaturgrenzen möglicherweise mit einer Schädigung der Bremseinrichtung zu rechnen ist. In diesem Falle sollte zur Sicherung der Bremseinrichtung eine Deaktivierung der Bremseinrichtung erfolgen. Je nach Betriebszustand der Gasturbine zu dem Zeitpunkt der Deaktivierung müssten auch geeignete Schritte zum Weiterbetrieb der Gasturbine vorgenommen werden. Notfalls müsste eine Notausschaltung der Gasturbine erfolgen.

Gemäß einem besonders bevorzugten Ausführungsverfahren ist vorgesehen, dass weiter folgender Schritt nach Aktivierung der Bremseinrichtung umfasst sein soll:
- Deaktivieren der Bremseinrichtung nachdem der aktuelle Lastzustand der Gasturbine unter einen vorbestimmten unteren Grenzwert gefallen ist.

Die Deaktivierung erlaubt insbesondere die Vermeidung des Erlöschens der Brennerflamme nach einem Ausschalten der Gasturbine, so dass die Gasturbine wieder nach dem Lastabfall hochgefahren werden kann. Zudem kann möglicherweise auch vorgesehen sein, die Brennstoffversorgung nach einer ersten Verminderung wieder zu erhöhen, damit dem Erlöschen der Brennerflamme entgegengewirkt werden kann. Der ausführungsgemäße untere Grenzwert für den Lastzustand der Gasturbine kann mit einem Ziellastzustand identisch sein.

Gemäß einer besonders bevorzugten Ausführungsform der Erfindung ist vorgesehen, dass weiterhin folgender Schritt nach Erzeugung des elektrischen Signals zur Einleitung eines Lastabwurfs umfasst sein soll:
- Entnahme von elektrischer Energie aus einem durch die Gasturbine angetriebenen Generator und Betreiben der Bremseinrichtung unter Nutzung dieser elektrischen Energie.

Folglich kann durch geeignete schaltungstechnische Maßnahmen dem Generator auch nach Einleitung des Lastabwurfs elektrische Energie entnommen werden, die zum Betrieb der Bremseinrichtung genutzt wird. Im einfachsten Fall kann bspw. die elektrische Energie aus dem Generator für den Betrieb einer mechanischen oder hydraulischen Scheibenbremse entnommen werden, so dass neben der direkt durch die Scheibenbremse auf den Gasturbinenläufer übertragenen Bremskraft zudem noch dem Gasturbinenläufer indirekt über den Generator Energie entzogen wird. Folglich wird eine noch schnellere Verminderung der Drehzahl des Gasturbinenläufers erreicht. Hierbei ist es, wie der Fachmann leicht nachvollziehen kann, erforderlich, dass der Generator mit dem Gasturbinenläufer gekoppelt ist.

Gemäß einer besonders bevorzugten Ausführungsform des erfindungsgemäßen Verfahrens ist vorgesehen, dass weiterhin folgende Schritte umfasst sind: - Erfassung und/oder Berechnung des aktuellen Drehzahlzustands des Gasturbinenläufers und - Bestimmung eines Bremsparameters unter Nutzung des aktuellen Drehzahlzustands, welcher mit der Bremskraft auf den Gasturbinenläufer korreliert ist, - und/oder Bestimmung der Bremsdauer unter Nutzung des aktuellen Drehzahlzustands, über welche Bremsdauer die Bremskraft auf den Gasturbinenläufer übertragen wird. Folglich ist es möglich, bei einem Lastabwurf, bei welchem ja mitunter auch Überdrehzahlen auftreten können, die Drehzahl des Gasturbinenläufers wieder auf Normaldrehzahlen zu vermindern, um danach etwa wieder gezielt einen Normalbetrieb aufnehmen zu können. Wesentlich ist hierbei zu erkennen, dass während eines Zustands des Lastabwurfs mitunter keine Drehzahlregulierung durch die Last eines Stromnetzes erfolgt. Eine Drehzahlregulierung erfolgt also nicht "automatisch" wie während eines normalen Lastbetriebs, etwa während eines Teillastbetriebs.

Gemäß einer besonders bevorzugten Ausführungsform der erfindungsgemäßen Gasturbine ist vorgesehen, dass die Bremseinrichtung als hydraulische Scheibenbremse und/oder als Wirbelstrombremse ausgebildet ist, welche an den Gasturbinenläufer der Gasturbine, an einem Rotor eines Generators oder an einer Zwischenwelle zwischen dem Rotor und dem Gasturbinenläufer angeordnet ist. Bevorzugt weist die Wirbelstrombremse hierbei Elektromagnete auf, welche mittels der elektrischen Energie aus dem Generator betrieben werden können, so dass bei Lastabwurf auch eine vorteilhafte Energieabführung aus dem Generator in die Elektromagnete der Wirbelstrombremse erfolgen kann, und so eine zusätzliche Bremswirkung erreicht bzw. unterstützend erzeugt.

Eine hydraulische Scheibenbremse bzw. eine Wirbelstrombremse beaufschlagt den Gasturbinenläufer direkt mit einer Bremskraft und erzeugt ein drehzahlverminderndes Moment. Die Bremskraft kann hierbei direkt auf den Rotor bzw. den Gasturbinenläufer der Gasturbine wirken bzw. je nach Ausführungsform der Gasturbine auch auf eine Zwischenwelle, welche etwa den Generator mit anderen drehenden Teilen der Gasturbine verbindet. Durch die direkte Übertragung der Bremskraft auf die drehenden Teile wird jedoch typischerweise Wärme entwickelt, die aus dem System in den meisten Fällen abgeführt werden sollte. Es ist aber auch denkbar, dass die mit dem Gasturbinenläufer bzw. dem Rotor oder der Zwischenwelle verschalteten Bauteile eine ausreichend träge thermische Masse haben, so dass auch bei Lastabwurf die durch den Bremsvorgang erzeugte Wärmemenge von diesen drehenden Teilen aufgenommen und gespeichert werden kann.

Alternativ oder auch zusätzlich kann die Bremseinrichtung weiterhin wenigstens eine Widerstandsbrücke aufweisen, welche bei Lastabwurf mit elektrischer Energie aus einem Generator beschickt wird und die elektrische Energie in thermische Energie umsetzt. Die Widerstandsbrücke ist also dazu ausgebildet, thermisch aufgeheizt zu werden und über einen Zeitraum von nur wenigen Sekunden ein geeignetes Bremsleistungsäquivalent an thermischer Energie aufzunehmen. Um die thermische Aufheizung innerhalb technisch machbarer Grenzen zu halten, kann auch eine Mehrzahl an Widerstandsbrücken seriell verschaltet werden, bzw. eine Widerstandsbrücke weist eine Anzahl an einzelnen Untereinheiten auf.

Hinsichtlich einer Abschätzung für die Größe solcher Widerstandsbrücken soll auf die weiter unten beschriebenen Ausführungsformen verwiesen werden. Ausführungsgemäß kann Energie aus dem Generator in elektrischer Form in eine Widerstandsbrücke eingeleitet und dort thermisch umgesetzt werden. Die an das Netz bei regulärem Betrieb abgegebene Last wird also an die Widerstandsbrücke abgegeben, so dass gleichzeitig der Generator über die Zwischenwelle, den Rotor bzw. den Gasturbinenläufer ein drehzahlverminderndes Drehmoment ausüben kann. Hierbei ist natürlich erforderlich, dass schaltungstechnisch die elektrische Leistungsabgabe nicht mehr in das Netz erfolgt, sondern in die Widerstandsbrücke. Die Widerstandsbrücke erfordert hierbei also nur eine schaltungstechnische Erweiterung der Gasturbine ohne jedoch am Gasturbinenläufer weitere Teile wie etwa eine Bremsscheibe vorsehen zu müssen. Vielmehr ist es möglich ausschließlich über den Generator auf die Zwischenwelle, den Rotor bzw. den Gasturbinenläufer ein geeignetes Drehmoment zu übertragen, welches zu einer Verminderung der Drehzahl führt.

Gemäß einer Weiterentwicklung dieser ausführungsgemäßen Gasturbine kann vorgesehen sein, dass die Widerstandsbrücke weiterhin eine thermische Kühleinrichtung aufweist, welche dazu ausgebildet ist, thermische Energie von der Widerstandsbrücke abzuführen. Solche Kühleinrichtungen können etwa mithilfe eines Kühlfluidkreislaufs realisiert sein, wobei das Kühlfluid die entsprechende thermisch umgesetzte Bremsleistung aufnehmen kann. Folglich steht die Widerstandsbrücke nach erreichter Kühlung für einen erneuten Lastabwurf schneller zur Verfügung. Die mittels der Kühleinrichtung abgeführte thermische Energie kann zur geeigneten thermischen Aufbereitung anderer Prozessfluide herangezogen werden. Ebenfalls ist es denkbar, dass die Widerstandsbrücke zwangsdeaktiviert wird, falls die Temperatur der Widerstandsbrücke höher als ein vorbestimmter Grenzwert ist. Demgemäß kann vermieden werden, dass die Widerstandsbrücke thermisch Schaden nimmt.

Gemäß einer Weiterführung bzw. alternativen Ausführungsform dieser Gasturbine ist vorgesehen, dass die Leittechnik derart ausgebildet ist, dass die Anzahl der zugeschalteten Widerstandsbrücken auf der Grundlage eines Vergleichs des aktuellen Lastzustands der Gasturbine mit einem Ziellastzustand erfolgt. Je nach diesem Vergleich von aktuellem Lastzustand und Ziellastzustand können nach Anforderung mehr oder weniger Widerstandsbrücken zugeschaltet werden, um damit indirekt über den Generator ein größeres bzw. kleineres Drehmoment zur Drehzahlverminderung auf den Rotor, die Zwischenwelle oder den Gasturbinenläufer zu übertragen. Ebenfalls ist es möglich, dass die Anzahl der zugeschalteten Widerstandsbrücken auf der Grundlage des aktuellen Lastzustands der Gasturbine allein errfolgt.

Nachfolgend soll die Erfindung anhand einzelner Figuren im Detail näher beschrieben werden. Hierbei ist darauf hinzuweisen, dass die in den Figuren mit gleichen Bezugszeichen versehenen technischen Merkmale gleiche technische Funktionen aufweisen.

Weiterhin soll darauf hingewiesen werden, dass die Erfindung in den Figuren lediglich schematisch dargestellt ist und damit keine Einschränkung hinsichtlich der Ausführbarkeit der Erfindung gegeben ist.

Zudem soll darauf hingewiesen werden, dass die Erfindung in beliebiger Kombination der nachfolgend beschriebenen Bauteile beansprucht wird, soweit die der Erfindung zugrundeliegenden Aufgaben mit dieser Kombination gelöst werden kann.

Hierbei zeigen:
- Figur 1: eine erste Ausführungsform des erfindungsgemäßen Verfahrens zum Betrieb einer Gasturbine bei Lastabwurf in flussdiagrammatischer Darstellung;
- Figur 2: eine erste Ausführungsform der erfindungsgemäßen Gasturbine in schematischer Schaltansicht;
- Figur 3: eine weitere Ausführungsform der erfindungsgemäßen Gasturbine in schematischer Schaltansicht;
- Figur 4: eine darüber hinausgehende Ausführungsform der erfindungsgemäßen Gasturbine in schematischer Schaltansicht.

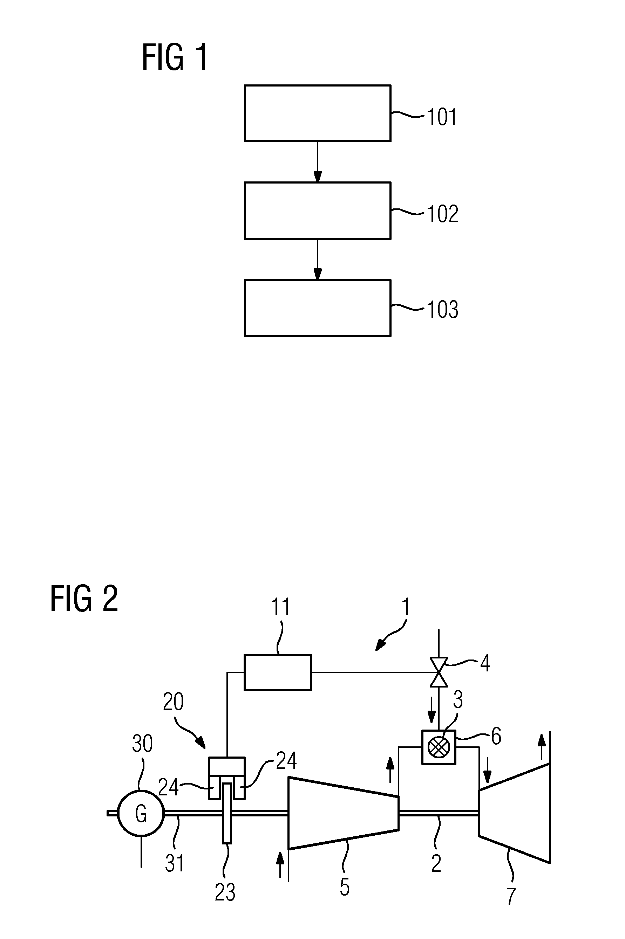

Figur 1 betrifft eine Ausführungsform des erfindungsgemäßen Verfahrens zum Betrieb einer Gasturbine bei Lastabwurf, welches folgende Schritte umfasst:
- Erzeugung eines elektrischen Signals 10 durch die Leittechnik 11 zur Einleitung eines Lastabwurfs (erster Verfahrensschritt 101);
- danach folgend eine Aktivierung einer Bremseinrichtung 20, welche direkt oder indirekt mit dem Gasturbinenläufer 2 zusammen wirkt zur Übertragung einer Bremskraft auf diesen (zweiter Verfahrensschritt 102);
- eine Verminderung der Brennstoffzufuhr an den Brenner 3 der Gasturbine 1, insbesondere ebenfalls nach Erzeugung des elektrischen Signals 10 folgend (dritter Verfahrensschritt 103).

Figur 2 betrifft eine erste Ausführungsform der erfindungsgemäßen Gasturbine 1, welche eine Leittechnik 11 umfasst, die sowohl ein Brennstoffventil 4 wie auch eine Bremseinrichtung 20 steuern bzw. regeln kann. Die Gasturbine 1 weist neben einem Gasturbinenläufer 2 einen Brenner 3 auf, welcher mit Brennstoff sowie mit verdichteter Luft aus einem Verdichter 5 zur Verbrennung beschickt werden kann. In der Brennkammer 6 wird dieser Brennstoff zusammen mit der verdichteten Luft verbrannt und weiter an die Entspannungsturbine 7 zur Umsetzung von thermischer Energie in mechanische Dreharbeit geleitet. Der Gasturbinenläufer 2 ist weiterhin gekoppelt mit einem Generator 30 über einen Rotor 31 (der auch als Zwischenwelle 32 ausgebildet sein kann), wobei der Rotor 31 mit einer Bremsscheibe 23 versehen ist, die auch von der Bremseinrichtung 20 umfasst ist. Die Bremseinrichtung 20 ist als hydraulische Bremseinrichtung ausgebildet, welche bspw. zwei Bremsblöcke 24 aufweist, die bei Bedarf gegen die Bremsscheibe 23 hydraulisch gepresst werden und folglich eine Verlangsamung des Rotors 31 und damit des Gasturbinenläufers 2 bewirken können.

Ist nun ein Lastabwurf durch ein elektrisches Signal angezeigt, wird intern in der Leittechnik 11 ein elektrisches Signal erzeugt, welches den Lastabwurf einleitet.

Die Einleitung umfasst eine Verminderung der Brennstoffzufuhr an den Brenner 3, indem etwa das Brennstoffventil 4 durch die Leittechnik 11 in eine Schließstellung versetzt wird. Alternativ kann das Brennstoffventil 4 auch in einen Zustand versetzt sein, welcher lediglich einen geringeren Brennstofffluss ermöglicht, dieser jedoch nicht gleich Null ist. Durch die Verminderung des Brennstoffflusses wird während des Lastabwurfs eine geringere Menge an Brennstoff verbrannt und damit eine geringere thermische Energiemenge erzeugt. Gleichzeitig kann bspw. auch die Luftzufuhr in den Verdichter durch nicht weiter gezeigte Verdichterleitschaufeln (Verdichterleitgitter) vermindert werden. Da jedoch aufgrund des Totraumvolumens in der Brennstoffzuleitung eine sofortige Verminderung der Brennstoffzufuhr an den Brenner 3 nicht erfolgen kann, kommt es mitunter zu einer Erhöhung der Drehzahl des Gasturbinenläufers 2, da die Gasturbine mit Einleitung des Lastabwurfs insbesondere auch vom Netz genommen wurde. In Folge wird bei Abwesenheit der Netzlast kurzzeitig weiterhin eine verhältnismäßig hohe Brennstoffmenge verbrannt, so dass der Gasturbinenläufer 2 schnell in einen unerwünschten Überdrehzahlzustand gebracht wird.

Andererseits ist es auch denkbar, dass bei nicht ausreichender Abstimmung der veränderten Menge an Ansaugluft sowie der veränderten Menge an Brennstoff die Verbrennung während des Lastabwurfs bei zu viel Luft in einem sehr mageren Luft-Brennstoff-Gemisch erfolgt, wodurch die Gefahr besteht, dass die Brennerflamme erlischt.

Beide Nachteile können durch eine ausführungsgemäße Bremseinrichtung 20 vermieden werden, in dem diese nämlich nach Erzeugung des den Lastabwurf einleitenden elektrischen Signals aktiviert wird. Die Aktivierung der Bremseinrichtung 20 führt zur hydraulischen Pressung der Bremsblöcke 24 gegen die Bremsschreibe 23, so dass eine Verminderung der Drehzahl des Gasturbinenläufers die Folge ist. Die Bremseinrichtung 20 beaufschlagt die Bremsscheibe 23 hierbei mit einer Bremskraft, die ausreichend hoch ist, um eine entsprechende Drehzahlverminderung zu erreichen.

Die Bremskraft bzw. erforderliche Bremsleistung kann als Funktion des Differenzwertes von aktuellem Lastzustand und Ziellastzustand berechnet bzw. in der Leittechnik als Tabelle hinterlegt sein. Die Bremsdauer wird hierbei ebenfalls derart bestimmt, dass ein ausreichend langer Bremsvorgang vorherrscht. Die Bremsdauer kann ebenfalls wiederum als Funktion des Differenzwertes zwischen aktuellem Lastzustand und Ziellastzustand bestimmt werden. Die Bremskraft bzw. Bremsleistung kann zudem auch variiert werden, so dass im Sinne eines lernenden Systems die vormals erfolgten Lastabwürfe in die Bestimmung der Bremsparameter bzw. Bremsdauer eines neuen Lastabwurfs zu rechnen sind.

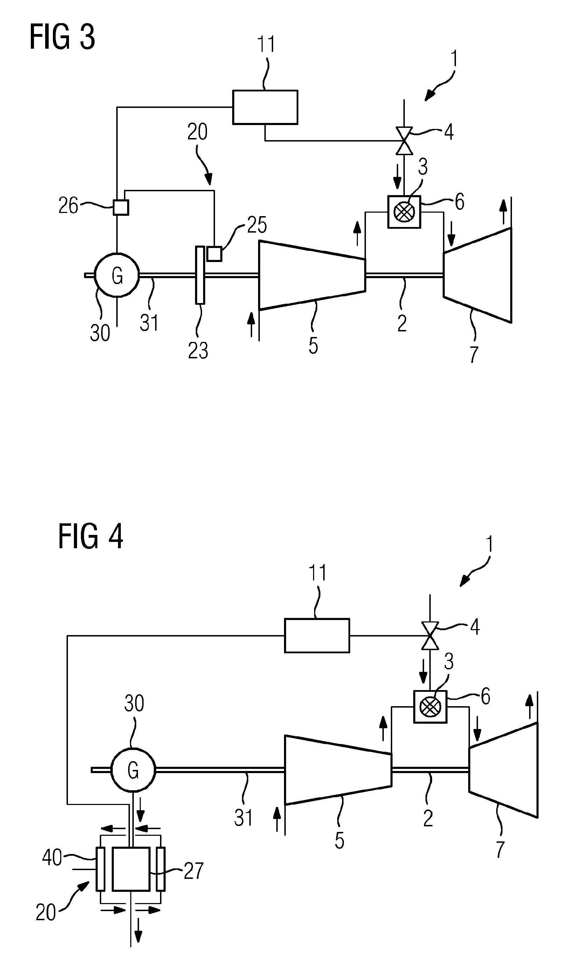

Figur 3 zeigt eine weitere Ausführungsform der erfindungsgemäßen Gasturbine 1, welche sich von der in Figur 2 gezeigten Ausführungsform lediglich dahingehend unterscheidet, dass die Bremseinrichtung 20 nun nicht als hydraulische Scheibenbremse sondern als Wirbelstrombremse ausgeführt ist. Hierbei kann die Bremseinrichtung 20 einen geeigneten Transformator 26 umfassen, der die elektrische Energie aus dem Generator 30 auf geeignete Spannungs- bzw. Stromstärkenwerte transformiert, die mittels eines Elektromagneten 25 der Wirbelstrombremse nutzbar sind. Der Elektromagnet 25 wirkt bei Betätigung mit einer geeigneten Bremsscheibe 23 zusammen, die wiederum fest mit dem Rotor 31 verbunden ist. Bei Betrieb der Bremseinrichtung 20 kommt es nach Erzeugung des den Lastabwurf einleitenden Signals zu einer Entnahme von elektrischer Energie aus dem Generator 30 und zu einer Erzeugung von elektrischen Wirbelströmen in der Bremsscheibe 23.

Die vom Generator weiterhin erzeugte überschüssige elektrische Energie kann anderweitig abgeführt werden. Durch die Aktivierung der Bremseinrichtung 20 erfolgt eine Drehzahlverminderung des Gasturbinenläufers, da dieser vermittelt über die Bremsschreibe 23 mit einem entsprechenden Drehmoment zur Verminderung der Drehzahl beaufschlagt wird.

Figur 4 zeigt eine weitere Ausführungsform der erfindungsgemäßen Gasturbine 1, deren Bremseinrichtung 20, jedoch nicht mit dem Gasturbinenläufer 2, oder mit dem Rotor 31 bzw. einer Zwischenwelle 32 verbunden wäre, sondern mit dem Generator 30 bei Lastabwurf verschaltet werden kann, und mindestens eine geeignete Widerstandsbrücke 27 umfasst. Wie bereits weiter oben ausgeführt, kann bei Lastabwurf die vom Generator erzeugte elektrische Energie unter Last (die nicht notwendig eine Netzlast ist) an die mindestens eine Widerstandsbrücke 27 abgegeben werden, die sich infolge des Stromflusses thermisch aufheizt. Zur Kühlung der Widerstandsbrücke 27 kann auch eine Kühleinrichtung 40 vorgesehen sein, die die aktive Kühlung der Widerstandsbrücke 27 bewirkt. Bspw. kann eine derartige Kühlung mit Hilfe eines Fluidkreislaufes ausgebildet sein.

Die ausführungsgemäße Widerstandsbrücke kann auch mehrere Einzelwiderstände umfassen, z.B. zehn verschiedene Einzelwiderstände, wobei jeder separat als Einzelverbraucher zugeschaltet werden kann. Die Einzelwiderstände können bspw. aus Stäben mit einem Material hohen elektrischen Widerstands ausgebildet sein, etwa einer Kupfer-Nickel-Mangan-Legierung wie Konstantan oder auch Nickelin. Interne Abschätzungen der Anmelderin haben ergeben, dass bereits eine Gesamtmasse an Einzelstäben von 1000 kg bereits ausreichend wäre, um einen Lastabwurf einer Gasturbine vorteilhaft zu unterstützen. Hierbei ist die Wärmekapazität des Materials der Stäbe zu berücksichtigen, wobei ebenfalls der Schmelzpunkt des Materials nicht überschritten werden sollte. Erfolgt eine Aufheizung aller Stäbe, sollte ein Mindestabstand von etwa 500°C unterhalb des Schmelzpunktes des Materials eingehalten werden, um eine ausreichende Materialsicherheit wie auch Materialkonstanz gewährleisten zu können. Insofern kann bspw. eine Temperaturerhöhung des Materials der Einzelwiderstände um etwa 750 °C bei einem Schmelzpunkt von 1280 °C angestrebt werden. Bei einer Wärmekapazität von 410 J/kg*K und einem Materialgewicht von 1000 kg sind folglich über 300 Megajoule in das Material thermisch einbringbar. Über einen Zeitraum von 10 Sekunden während des Lastabwurfs könnten damit mindestens 30 MW an thermischer Leistung aufgenommen werden, um den Lastabwurf zu unterstützen bzw. dazu beizutragen, diesen zu kontrollieren. Bei entsprechend höheren Anforderungen wäre eine höhere Anzahl an Einzelwiderständen bzw. eine entsprechend höhere Masse zu veranschlagen.

Wird nun durch ein elektrisches Signal ein Lastabwurf eingeleitet, kann dieses auch dazu dienen, eine Anzahl an Einzelwiderständen in der Widerstandsbrücke 27 zuzuschalten. Der Zeitpunkt wann ein solcher Einzelwiderstand zugeschaltet bzw. auch abgeschaltet wird bzw. auch die Anzahl an zugeschalteten Widerständen, kann wiederum aufgrund des aktuellen Lastzustands ermittelt werden.

Alternativ oder auch zusätzlich können diese Werte auch aus einem Vergleichswert zwischen aktuellem Lastzustand und einem Ziellastzustand bestimmt werden. Weiterhin ist es möglich, einzelne Widerstände bzw. die gesamte Widerstandsbrücke 27 bei Erreichen von unzulässig hohen Temperaturen abzuschalten und zwangszudeaktivieren.

Weitere Ausführungsformen ergeben sich aus den Unteransprüchen.

## Patentansprüche

1. Verfahren zum Betrieb einer Gasturbine (1) bei Lastabwurf, welches folgende Schritte umfasst:
- Erzeugung eines elektrischen Signals (10) durch die Leittechnik (11) zur Einleitung eines Lastabwurfs;
- danach folgend eine Aktivierung einer Bremseinrichtung (20), welche direkt oder indirekt mit dem Gasturbinenläufer (2) zusammen wirkt zur Übertragung einer Bremskraft auf diesen;
- eine Verminderung der Brennstoffzufuhr an den Brenner (3) der Gasturbine (1), insbesondere ebenfalls nach Erzeugung des elektrischen Signals (10) folgend.

2. Verfahren nach Anspruch 1,
**dadurch gekennzeichnet, dass**
weiterhin folgende Schritte umfasst sind:
- Erfassung oder Berechnung des aktuellen Lastzustands der Gasturbine (1) und
- Bestimmung eines Bremsparameters, welcher mit der Bremskraft auf den Gasturbinenläufer (2) korreliert ist,
- und/oder Bestimmung der Bremsdauer, über welche die Bremskraft auf den Gasturbinenläufer (2) übertragen wird.

3. Verfahren nach Anspruch 2,
**dadurch gekennzeichnet, dass**
die Bestimmung des Bremsparameters auf der Grundlage eines Vergleichs des aktuellen Lastzustands der Gasturbine (1) mit einem Ziellastzustand erfolgt.

4. Verfahren nach Anspruch 2 oder 3,
**dadurch gekennzeichnet, dass**
die Bestimmung der Bremsdauer auf der Grundlage eines Vergleichs des aktuellen Lastzustands der Gasturbine (1) mit einem Ziellastzustand erfolgt.

5. Verfahren nach Anspruch 2 bis 4,
**dadurch gekennzeichnet, dass**
die Bestimmung des Bremsparameters und/oder der Bremsdauer durch Wertevergleich mit einer Tabelle erfolgt, welche in der Leittechnik hinterlegt ist.

6. Verfahren nach Anspruch 2 bis 5,
**dadurch gekennzeichnet, dass**
die Bestimmung des Bremsparameters und/oder der Bremsdauer derart erfolgt, dass die Betriebszustände von zeitlich vorhergehenden Lastabwürfen berücksichtigt werden.

7. Verfahren nach einem der vorhergehenden Ansprüche,
**dadurch gekennzeichnet, dass**
nach oder auch vor Aktivierung der Bremseinrichtung eine Bestimmung der Erwärmung der direkt oder indirekt durch die Bremskraft beaufschlagten Teile der Gasturbine (1) erfolgt, wobei bei Überschreiten eines vorbestimmten Temperaturgrenzwertes eine Deaktivierung der Bremseinrichtung (20) erfolgt.

8. Verfahren nach einem der vorhergehenden Ansprüche,
**dadurch gekennzeichnet, dass**
weiterhin folgender Schritt nach Aktivierung der Bremseinrichtung (20) umfasst ist:
- Deaktivieren der Bremseinrichtung (20) nachdem der aktuelle Lastzustand der Gasturbine (1) unter einen vorbestimmten unteren Grenzwert gefallen ist.

9. Verfahren nach einem der vorhergehenden Ansprüche,
**dadurch gekennzeichnet, dass**
weiterhin folgender Schritt nach Erzeugung des elektrischen Signals (10) umfasst ist:
- Entnahme von elektrischer Energie aus einem durch die Gasturbine (1) angetriebenen Generator (30) und Betreiben der Bremseinrichtung (20) unter Nutzung dieser elektrischen Energie.

10. Verfahren nach einem der vorhergehenden Ansprüche,
**dadurch gekennzeichnet, dass**
weiterhin folgende Schritte umfasst sind:
- Erfassung und/oder Berechnung des aktuellen Drehzahlzustands des Gasturbinenläufers (2) und
- Bestimmung eines Bremsparameters unter Nutzung des aktuellen Drehzahlzustands, welcher Bremsparameter mit der Bremskraft auf den Gasturbinenläufer (2) korreliert ist,
- und/oder Bestimmung der Bremsdauer unter Nutzung des aktuellen Drehzahlzustands, über welche Bremsdauer die Bremskraft auf den Gasturbinenläufer (2) übertragen wird.

11. Gasturbine (1) umfassend eine Leittechnik (11), welche derart ausgebildet ist, dass zur Einleitung eines Lastabwurfs ein elektrisches Signal (10) durch die Leittechnik (11) erzeugt wird, weiterhin umfassend eine Bremseinrichtung (20), welche mit dem Gasturbinenläufer (2) direkt oder indirekt zusammen wirkt zur Übertragung einer Bremskraft auf diesen, wobei die Bremseinrichtung (20) durch das elektrische Signal (10) aktiviert wird, und wobei weiterhin ein Brennstoffventil (4) umfasst ist, welches derart gesteuert ist, dass insbesondere nach Erzeugung des elektrischen Signals (10) die Brennstoffzufuhr an den Brenner (3) der Gasturbine (1) vermindert wird.

12. Gasturbine nach Anspruch 11,
**dadurch gekennzeichnet, dass**
die Bremseinrichtung (20) als hydraulische Scheibenbremse und/oder als Wirbelstrombremse ausgebildet ist, welche an dem Gasturbinenläufer (2) der Gasturbine (10), an einem Rotor (31) eines Generators (30) oder an einer Zwischenwelle (32) zwischen dem Rotor (31) und dem Gasturbinenläufer (2) angeordnet ist.

13. Gasturbine nach einem der Ansprüche 11 oder 12,
**dadurch gekennzeichnet, dass**
die Bremseinrichtung (20) weiterhin wenigstens eine Widerstandsbrücke aufweist, welche bei Lastabwurf mit elektrischer Energie aus einem Generator (30) beschickt wird und die elektrische Energie in thermische Energie umsetzt.

14. Gasturbine nach Anspruch 13,
**dadurch gekennzeichnet, dass**
die Widerstandsbrücke weiter eine thermische Kühleinrichtung (40) aufweist, welche dazu ausgebildet ist, thermische Energie von der Widerstandsbrücke abzuführen.

15. Gasturbine nach einem der Ansprüche 13 oder 14,
**dadurch gekennzeichnet, dass**
die Leittechnik (11) derart ausgebildet ist, dass die Anzahl der zugeschalteten Widerstandsbrücken auf der Grundlage eines Vergleichs des aktuellen Lastzustands der Gasturbine (1) mit einem Ziellastzustand erfolgt.
